# EUROPÄISCHE PATENTANMELDUNG

(11) **EP 4 707 642 A1**
(43) Veröffentlichungstag der Anmeldung: **11.03.2026**
(21) Anmeldenummer: 25198309.4
(22) Anmeldetag: 27.08.2025
(51) Int. Cl.: F16H 61/4017, F16H 61/421, F16H 61/44

(54) **HYDRAULISCHES ANTRIEBSSYSTEM**

(30) Priorität: 09.09.2024 DE 102024208524
(71) Anmelder: Robert Bosch GmbH, 70442 Stuttgart (DE)
(72) Erfinder: Apperger, Andreas, 72184 Eutingen-Rohrdorf (DE)

(57) **Zusammenfassung**

Die Erfindung betrifft ein hydraulisches Antriebssystem, aufweisend eine erste Hydraulikmaschine (2), die einen ersten Druckanschluss (22) und einen ersten Tankanschluss (23) aufweist, der mit einem Tank (10) verbunden oder verbindbar ist, eine zweite Hydraulikmaschine (4), die einen zweiten Druckanschluss (24), der mit dem ersten Druckanschluss (22) über eine Druckleitung (12) verbunden ist, und einen zweiten Tankanschluss (25) aufweist, wobei die zweite Hydraulikmaschine (4) eine null-durchstellbare verstellbare Verdrängung aufweist, eine Androsseleinrichtung (42), wobei der zweite Tankanschluss (25) über die Androsseleinrichtung (42) mit dem Tank (10) verbunden oder verbindbar ist, so dass Druckmittel sowohl vom zweiten Tankanschluss (25) zum Tank (10) als auch vom Tank (10) zum zweiten Tankanschluss (25) durch die Androsseleinrichtung (42) fließen kann, wobei die Androsseleinrichtung (42) derart ausgestaltet ist, dass bei einem Volumenstrom an Druckmittel vom zweiten Tankanschluss (25) zum Tank (10) ein größerer Druckverlust auftritt als bei einem Volumenstrom an Druckmittel vom Tank (10) zum zweiten Tankanschluss (25).

## Beschreibung

Die vorliegende Erfindung betrifft hydraulische Antriebssysteme.

### Hintergrund der Erfindung

Fahrzeuge, z.B. mobile Arbeitsmaschinen, können ein hydraulisches Antriebssystem als Fahrantrieb aufweisen, das als offenes hydraulisches System konzipiert ist. Für das Fahren weist ein solches System eine erste Hydraulikmaschine bzw. Hydraulikpumpe, welche von einem Motor angetrieben wird, auf. Diese Hydraulikpumpe treibt dann eine zweite Hydraulikmaschine bzw. einen Hydraulikmotor an, welcher die Kraft auf die Räder des Fahrzeugs überträgt. Um das Fahrzeug bei Bergabfahrt hydraulisch zu bremsen, wird der Hydraulikmotor über die Nulllage verschwenkt und arbeitet dann als Hydraulikpumpe und bremst somit aktiv das Fahrzeug. Im Pumpenbetrieb saugt der Hydraulikmotor aus einem nicht vorgespannten Tank.

### Offenbarung der Erfindung

Erfindungsgemäß werden hydraulische Antriebssysteme mit den Merkmalen der unabhängigen Patentansprüche vorgeschlagen. Vorteilhafte Ausgestaltungen sind Gegenstand der Unteransprüche sowie der nachfolgenden Beschreibung.

Gemäß einem ersten Aspekt der Erfindung wird ein hydraulisches Antriebssystem bereitgestellt, das eine erste Hydraulikmaschine, die einen ersten Druckanschluss und einen ersten Tankanschluss aufweist, der mit einem Tank verbunden oder verbindbar ist, und eine zweite Hydraulikmaschine aufweist, die einen zweiten Druckanschluss, der mit dem ersten Druckanschluss über eine Druckleitung verbunden ist, und einen zweiten Tankanschluss aufweist, wobei die zweite Hydraulikmaschine eine null-durchstellbare verstellbare Verdrängung aufweist.

Das hydraulische Antriebssystem weist eine Androsseleinrichtung, wobei der zweite Tankanschluss über die Androsseleinrichtung mit dem Tank verbunden oder verbindbar ist, wobei die Androsseleinrichtung derart ausgestaltet ist, dass bei einem Volumenstrom an Druckmittel vom zweiten Tankanschluss zum Tank ein größerer Druckverlust auftritt als bei einem Volumenstrom an Druckmittel vom Tank zum zweiten Tankanschluss. Durch die Androsseleinrichtung wird erreicht, dass einerseits, bei Motorbetrieb der zweiten Hydraulikmaschine, Kavitationen vermieden werden und andererseits, bei Pumpenbetrieb der zweiten Hydraulikmaschine, ein Ansaugen mit relativ wenig Leistungsverlust aus dem Tank erfolgen kann.

Die Androsseleinrichtung ist derart ausgestaltet, dass Druckmittel sowohl vom zweiten Tankanschluss zum Tank als auch vom Tank zum zweiten Tankanschluss durch die Androsseleinrichtung fließen kann. D.h. es ist sowohl ein Volumenstrom an Druckmittel vom zweiten Tankanschluss zum Tank als auch ein Volumenstrom vom Tank zum zweiten Tankanschluss möglich, wobei die Richtung des Volumenstroms von der jeweilig vorliegenden Förderrichtung (Motorbetrieb oder Pumpenbetrieb) der zweiten Hydraulikmaschine ist abhängig ist.

Der Begriff "verbunden" bzw. "Verbindung" ist, soweit nichts anderes angemerkt ist, im Sinne von "hydraulisch verbunden" zu verstehen, d.h. im Sinne hydraulischer Verbindungen, z.B. hydraulischer Leitungen oder Kanäle, die einen Volumenstrom bzw. Fluss an Druckmittel zwischen durch eine hydraulische Verbindung verbundenen Elementen zu ermöglichen, wobei optional Steuerelemente, z.B. Ventile o.Ä. in einer hydraulischen Verbindung vorgesehen sein können, die den Volumenstrom an Druckmittel beeinflussen bzw. durch die dieser in steuerbarer Weise beeinflusst werden kann.

Gemäß einer Ausgestaltung weist die Androsseleinrichtung einen ersten und einen zweiten Strömungspfad auf, die parallel zueinander an einem jeweiligen ersten Ende mit dem zweiten Tankanschluss verbunden sind und an einem jeweiligen zweiten Ende mit dem Tank verbunden bzw. verbindbar sind, wobei im ersten Strömungspfad ein erstes Rückschlagventil vorgesehen ist, dessen Durchlassrichtung vom zweiten zum ersten Ende des ersten Strömungspfads verläuft, und wobei im zweiten Strömungspfad eine Blende oder Drossel vorgesehen ist. Durch die Blende bzw. Drossel kann ein Staudruck im Motorbetrieb der zweiten Hydraulikmaschine erreicht werden.

Gemäß einer Ausgestaltung ist im zweiten Strömungspfad ein zweites Rückschlagventil vorgesehen ist, dessen Durchlassrichtung vom ersten zum zweiten Ende des zweiten Strömungspfads verläuft.

Gemäß einer Ausgestaltung weist die Androsseleinrichtung einen Strömungspfad auf, der ein erstes Ende, das mit dem zweiten Tankanschluss verbunden ist, und ein zweites Ende, das mit dem Tank verbunden bzw. verbindbar ist, aufweist, wobei in dem Strömungspfad ein Klappenventil vorgesehen ist, das, wenn ein Volumenstrom vom ersten Ende zum zweiten Ende auftritt, in einen ersten Öffnungsquerschnitt verstellt wird und, wenn ein Volumenstrom vom zweiten Ende zum ersten Ende auftritt, in einen zweiten Öffnungsquerschnitt verstellt wird. Der erste Öffnungsquerschnitt ist kleiner als der zweite Öffnungsquerschnitt. Der erste und der zweite Öffnungsquerschnitt sind von null verschieden. Diese Ausgestaltung stellt einen weiteren, einfach zu realisierenden Aufbau der Androsseleinrichtung dar. Durch den kleineren Öffnungsquerschnitt (d.h. kleinere Querschnittsfläche) kann ein Staudruck im Motorbetrieb der zweiten Hydraulikmaschine erreicht werden.

Gemäß einer Ausgestaltung weist das Klappenventil eine schwenkbare Klappe auf, deren Schwenkbewegung durch einen ersten und einen zweiten Anschlag begrenzt wird, wobei, wenn die Klappe am ersten Anschlag anliegt, der erste Öffnungsquerschnitt vorliegt und, wenn die Klappe am zweiten Anschlag anliegt, der zweite Öffnungsquerschnitt vorliegt. Insbesondere ist ein Schwenkwinkel von einer Nullstellung der Klappe zum ersten Anschlag kleiner als ein Schwenkwinkel von der Nullstellung der Klappe zum zweiten Anschlag. Die Nullstellung bezeichnet eine Zwischenstellung der Schwenkbewegung, in der ein Öffnungsquerschnitt von null vorliegt. Schwenkwinkel sind als positive Werte zu verstehen.

Gemäß einer Ausgestaltung weist die erste Hydraulikmaschine eine verstellbare Verdrängung, insbesondere eine null-durchstellbare Verdrängung, auf. Entsprechend kann zusätzlich zur sekundärseitigen Steuerung (d.h. auf Seiten der zweiten Hydraulikmaschine) eine primärseitige Steuerung (d.h. auf Seiten der ersten Hydraulikmaschine) implementiert werden.

Gemäß einer Ausgestaltung weist das hydraulische Antriebssystem weiter einen Motor und/oder ein Antriebsgetriebe auf, der bzw. das mit einer Antriebwelle der ersten Hydraulikmaschine (drehfest) gekoppelt ist. Der Motor ist insbesondere ein Verbrennungsmotor, z.B. ein Dieselmotor, oder ein Elektromotor bzw. eine elektrische Maschine.

Gemäß einer Ausgestaltung weist das hydraulische Antriebssystem weiter ein Rad und/oder ein Abtriebsgetriebe und/oder eine rotatorisch bewegbare Komponente auf, das bzw. die mit einer Abtriebswelle der zweiten Hydraulikmaschine (drehfest) gekoppelt ist. Ein Rad ist z.B. Teil eines Fahrantriebs eines Fahrzeugs, der durch das hydraulische Antriebssystem implementiert wird.

Gemäß einer Ausgestaltung weist das hydraulische Antriebssystem wenigstens einen hydraulischen Verbraucher und eine Ventilanordnung auf, wobei der wenigstens eine hydraulische Verbraucher über die Ventilanordnung mit der Druckleitung verbunden ist und wobei die Ventilanordnung dazu eingerichtet ist, einen Fluss an Druckmittel von der Druckleitung zum wenigstens einen hydraulischen Verbraucher zu steuern. Entsprechend kann eine zusätzliche Arbeitshydraulik mit Druckmittel versorgt werden

Gemäß einem weiteren Aspekt der Erfindung wird ein hydraulisches Antriebssystem bereitgestellt, das eine erste Hydraulikmaschine bzw. Hydraulikpumpe, die einen ersten Druckanschluss und einen ersten Tankanschluss aufweist, der mit einem Tank verbunden oder verbindbar ist, und eine zweite Hydraulikmaschine bzw. ein Hydraulikmotor, die einen zweiten Druckanschluss, der mit dem ersten Druckanschluss über eine Druckleitung verbunden ist, und einen zweiten Tankanschluss aufweist, wobei die zweite Hydraulikmaschine eine null-durchstellbare verstellbare Verdrängung aufweist. Das hydraulische Antriebssystem weist weiterhin eine Staudruckleitung, die ein erstes Ende, das mit dem zweiten Tankanschluss verbunden ist, und ein zweites Ende, das mit dem Tank verbunden ist oder verbindbar ist, und eine elektronische Steuerung auf, die dazu eingerichtet ist, die erste und/oder die zweite Hydraulikmaschine zu steuern. Die Staudruckleitung weist einen minimalen Querschnitt auf, der ausreichend klein ist, so dass sich bei einem Volumenstrom an Druckmittel über die Staudruckleitung vom ersten Ende zum zweiten Ende ein (ausreichender) Staudruck ergibt, und die elektronische Steuerung ist dazu eingerichtet, die erste und/oder die zweite Hydraulikmaschine zu steuern, so dass ein Volumenstrom an Druckmittel vom zweiten zum ersten Ende einen vorbestimmten Volumenstrom-Maximalwert nicht überschreitet und/oder so dass, bei einem Volumenstrom an Druckmittel vom zweiten zum ersten Ende, ein Druckabfall zwischen dem zweiten und dem ersten Ende einen vorbestimmten Druckabfall-Maximalwert nicht überschreitet. Der minimale Querschnitt der Staudruckleitung kann beispielsweise gegenüber einem Querschnitt der Druckleitung vermindert sein.

Gemäß einer Ausgestaltung ist die elektronische Steuerung dazu eingerichtet ist, eine Drehzahl und/oder eine Verdrängung der zweiten Hydraulikmaschine einzuschränken, wenn der Volumenstrom vom zweiten zum ersten Ende vorliegt. Dies stellt eine einfache Möglichkeit dar, den Volumenstrom-Maximalwert bzw. Druckabfall-Maximalwert nicht zu überschreiten, da entsprechende Daten, die von jeweiligen Betriebspunkten abhängig sind, in einem Steuerungscomputerprogramm hinterlegt werden können.

Gemäß einer Ausgestaltung weist das hydraulische Antriebssystem weiter wenigstens einen hydraulischen Verbraucher und eine Ventilanordnung auf, wobei der wenigstens eine hydraulische Verbraucher über die Ventilanordnung mit der Druckleitung verbunden ist und wobei die Ventilanordnung dazu eingerichtet ist, einen Fluss an Druckmittel von der Druckleitung zum wenigstens einen hydraulischen Verbraucher zu steuern. Die elektronische Steuerung ist insbesondere dazu eingerichtet ist, die Ventilanordnung zu steuern.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt ein hydraulisches Antriebssystem gemäß einer Ausführungsform der Erfindung.
Figur 2 zeigt ein hydraulisches Antriebssystem gemäß einer Ausführungsform der Erfindung, die auf derjenigen der Figur 1 aufbaut.
Figur 3 zeigt ein hydraulisches Antriebssystem gemäß einer weiteren Ausführungsform der Erfindung.
Figur 4 zeigt ein hydraulisches Antriebssystem gemäß noch einer weiteren Ausführungsform der Erfindung.

### Detaillierte Beschreibung der Zeichnung

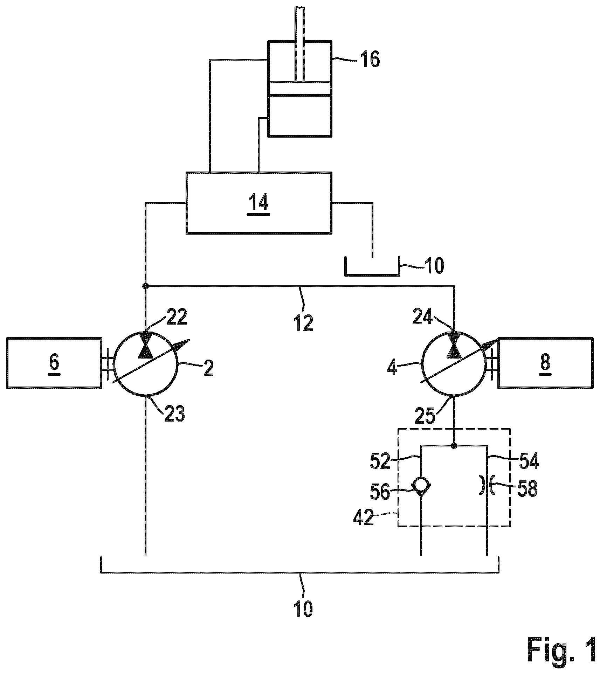

Figur 1 zeigt ein hydraulisches Antriebssystem gemäß einer Ausführungsform der Erfindung. Das hydraulische Antriebssystem ist z.B. in einem Fahrzeug als Fahrantrieb, insbesondere in einer mobilen Arbeitsmaschine, die zusätzlich eine Arbeitshydraulik aufweisen kann, vorgesehen.

Das hydraulische Antriebssystem weist eine erste Hydraulikmaschine 2 und eine zweite Hydraulikmaschine 4 auf. Die erste Hydraulikmaschine 2, d.h. eine Antriebwelle der ersten Hydraulikmaschine, kann mit einem Motor 6, z.B. einem Verbrennungsmotor, insbesondere einem Dieselmotor, oder einer elektrischen Maschine, (drehfest) gekoppelt sein. Auch kann ein Getriebe vorgesehen sein, das einerseits mit der Antriebwelle der ersten Hydraulikmaschine und andererseits mit einem Motor gekoppelt ist. Der Motor und/oder das Getriebe können Teil des hydraulischen Antriebssystems sein oder als Leistungsquelle von einer Maschine, z.B. einer mobilen Arbeitsmaschine, in der das hydraulische Antriebssystem verwendet wird, bereitgestellt sein.

Die erste Hydraulikmaschine 2 weist einen als ersten Druckanschluss 22 bezeichneten Anschluss bzw. Ausgang und einen als ersten Tankanschluss 23 bezeichneten Anschluss auf. Der erste Tankanschluss 23 ist mit einem Tank 10 verbunden oder verbindbar. Der Tank 10 kann Teil des hydraulischen Antriebssystems sein oder, alternativ, in der Maschine, in der das hydraulische Antriebssystem verwendet wird, bereits vorgesehen sein.

Die erste Hydraulikmaschine 2 weist beispielsweise eine verstellbare Verdrängung auf und ist insbesondere null-durchstellbar (d.h. bei gegebener Drehrichtung wird abhängig davon, ob die Verdrängung einen positiven oder negativen Wert aufweist, Druckmittel vom Tankanschluss zum Druckanschluss oder vom Druckanschluss zum Tankanschluss gefördert). Alternativ kann die Verdrängung der ersten Hydraulikmaschine 2 auch konstant sein oder zumindest nicht null-durchstellbar sein, z.B. wenn eine elektrische Maschine als Motor 6 verwendet wird, deren Drehzahl und Drehrichtung relativ schnell änderbar sind. Der Ausdruck "Verdrängung" (bzw. Schluckvolumen oder Fördervolumen) bezeichnet das je Umdrehung der Hydraulikmaschine geförderte Volumen an Druckmittel, diese kann beispielsweise auch als Schwenkwinkel angegeben sein. Die erste Hydraulikmaschine 2 ist beispielsweise eine Axialkolbenmaschine in Schrägscheibenbauweise oder Schrägachsenbauweise.

Die zweite Hydraulikmaschine 4 weist einen als zweiten Druckanschluss 24 bezeichneten Anschluss bzw. Ausgang und einen als zweiten Tankanschluss 25 bezeichneten Anschluss auf. Die zweite Hydraulikmaschine 2 weist eine verstellbare Verdrängung auf und ist null-durchstellbar (bzw. die Verdrängung ist null-durchstellbar). Die zweite Hydraulikmaschine 4 ist beispielsweise eine Axialkolbenmaschine in Schrägscheibenbauweise oder Schrägachsenbauweise.

Das hydraulische Antriebssystem weist weiterhin eine Druckleitung 12 bzw. einen Druckkanal auf die mit dem ersten Druckanschluss 22 und dem zweiten Druckanschluss 24 verbunden ist. Entsprechend kann Druckmittel (d.h. Hydraulikflüssigkeit, insbesondere Hydrauliköl) zwischen den beiden Druckanschlüssen und damit zwischen den beiden Hydraulikmaschinen fließen.

Die zweite Hydraulikmaschine 4 bzw. eine Abtriebswelle der zweiten Hydraulikmaschine 4 ist mit einem Rad oder einem Getriebe o.Ä. bzw. allgemein formuliert eine rotatorisch bewegbare Komponente 8 drehfest gekoppelt bzw. ist damit koppelbar. Entsprechend wird, wenn die zweite Hydraulikmaschine 4 als Hydraulikmotor wirkt, die Komponente 8 angetrieben, d.h. die zweite Hydraulikmaschine 4 übt ein Drehmoment auf die Komponente 8 aus, wobei Druckmittel durch die zweite Hydraulikmaschine 4 vom zweiten Druckanschluss 24 zum zweiten Tankanschluss 25 fließt. Die erste Hydraulikmaschine 2 fördert den entsprechenden Volumenstrom an Druckmittel über die Druckleitung 12 zur zweiten Hydraulikmaschine 2. Wenn die zweite Hydraulikmaschine 4 als Hydraulikpumpe wirkt, treibt die Komponente 8 die zweite Hydraulikmaschine 4 an, d.h. die Komponente 8 übt ein Drehmoment auf die zweite Hydraulikmaschine 4 aus, wobei Druckmittel durch die zweite Hydraulikmaschine 4 vom zweiten Tankanschluss 25 zum zweiten Druckanschluss 24 und damit in die Druckleitung 12 fließt. Dieser Fall kann bei einem Rad eines Fahrantriebs einer mobilen Arbeitsmaschine als Komponente beispielsweise bei Bremsvorgängen der Arbeitsmaschine auftreten. Das in diesem Fall von der zweiten Hydraulikmaschine 4 in die Druckleitung 12 geförderte Druckmittel kann über die erste Hydraulikmaschine 2, wenn deren Verdrängung durch null verstellt wird oder die Drehrichtung des Motors 6 geändert wird, zum Tank abfließen. Alternativ oder zusätzlich kann dieses in die Druckleitung 12 geförderte Druckmittel zur Versorgung eines hydraulischen Verbrauchers 16 verwendet werden. Hierbei stellt die Druckleitung 12 bzw. stellen die mit den beiden Druckanschlüssen 22, 24 verbundenen Elemente des hydraulischen Antriebssystems eine Hochdruckseite dar und stellen die mit den beiden Tankanschlüsse 23, 25 verbundenen Elemente des hydraulischen Antriebssystems eine Niederdruckseite dar. Insgesamt ist ein offenes hydraulisches System gebildet.

Die erste Hydraulikmaschine 2 wirkt typischerweise hauptsächlich als hydraulische Pumpe und kann daher auch als Hydraulikpumpe bezeichnet werden. Die zweite Hydraulikmaschine 4 wirkt typischerweise hauptsächlich als hydraulischer Motor und kann daher auch als Hydraulikmotor bezeichnet werden.

Das hydraulisches Antriebssystem weist weiterhin eine als Androsseleinrichtung 42 bezeichnete Einrichtung bzw. Anordnung auf, über welche der zweite Tankanschluss 23 ist mit dem Tank 10 verbunden oder verbindbar ist.

Die Androsseleinrichtung weist einen ersten Strömungspfad 52 und einen zweiten Strömungspfad 54 auf. Ein erstes Ende des ersten Strömungspfads 52 ist mit dem zweiten Tankanschluss 25 verbunden und ein zweites Ende des ersten Strömungspfads 2 ist mit dem Tank 10 verbunden oder verbindbar. Ebenso ist ein erstes Ende des zweiten Strömungspfads 54 ist mit dem zweiten Tankanschluss 25 verbunden und ein zweites Ende des zweiten Strömungspfads 2 ist mit dem Tank 10 verbunden oder verbindbar. Der erste und der zweiten Strömungspfad 52, 54 sind parallel zueinander angeordnet, d.h. es gibt keine Verbindung der beiden Strömungspfade miteinander zwischen den ersten und den zweiten Enden.

Im ersten Strömungspfad 52 ist ein Rückschlagventil 56 vorgesehen, dessen Durchlassrichtung vom zweiten zum ersten Ende des ersten Strömungspfads 52 verläuft, d.h. vom Tank 10 in Richtung des zweiten Tankanschlusses 25 bzw. in Richtung der zweiten Hydraulikmaschine 4. Ein Volumenstrom an Druckmittel ist im ersten Strömungspfad 52 also nur vom zweiten zum ersten Ende möglich.

Im zweiten Strömungspfad 54 eine Blende oder Drossel 58 vorgesehen ist. Diese verringert den Querschnitt im zweiten Strömungspfad 54 an einer Stelle. Alternativ könnte die hydraulische Leitung (bzw. der hydraulische Kanal), die den zweiten Strömungspfad 54 realisiert insgesamt einen verringerten Querschnitt aufweisen (gegenüber der Leitung die den ersten Strömungspfad realisiert und/oder gegenüber einem Querschnitt des zweiten Tankanschlusses).

Gemäß dieser Anordnung erfolgt bei einem Motorbetrieb der zweiten Hydraulikmaschine 4, d.h. wenn diese als Hydraulikmotor wirkt bzw. diese Druckmittel vom zweiten Druckanschluss 24 zum zweiten Tankanschluss 25 fördert, ein Volumenstrom an Druckmittel vom zweiten Tankanschluss 25 zum Tank lediglich über den zweiten Strömungspfad 54, in dem die Drossel 54 vorgesehen, so dass eine "Androsselung" dieses Volumenstroms erfolgt bzw. ein gewisser Staudruck erzeugt wird, der Kavitation in der zweiten Hydraulikmaschine 4 verhindert. Bei einem Pumpenbetrieb der zweiten Hydraulikmaschine 4, d.h. wenn diese als Hydraulikpumpe wirkt bzw. diese Druckmittel vom zweiten Tankanschluss 25 zum zweiten Druckanschluss 24 fördert, kann ein Volumenstrom über den ersten Strömungspfad 52 erfolgen (und über den zweiten Strömungspfad), so dass hier das Druckmittel relativ uneingeschränkt angesaugt werden kann bzw. die zweite Hydraulikmaschine 4 nur eine gering Leistung zum Ansaugen des Druckmittels vom Tank aufbringen muss. Druckwerte für den Staudruck (entsprechend dem Druckabfall vom zweiten Tankanschluss 25 über den zweiten Strömungspfad 54) können beim Motorbetrieb abhängig von der Drehzahl und/oder der Verdrängung beispielsweise im Bereich von 2 bis 15 bar liegen (wobei der Staudruck mit zunehmender Drehzahl und/oder zunehmender Verdrängung zunimmt) und können bei höheren Drehzahlen aufgrund der höheren Durchflussmenge auch über diesem Bereich liegen. Beim Pumpenbetrieb kann etwa bei nicht vorgespanntem Tank, d.h. der Absolutdruck im Tank ist ca. 1 bar, der Druck bis zur zweiten Hydraulikmaschine bis auf ca. 0,8 bar abfallen, d.h. der Druckabfall (Ansaugdruck) des Volumenstroms über ersten Strömungspfad 52 ist beispielsweise kleiner oder gleich 0,2 bar. Entsprechend liegt der Staudruck bei Motorbetrieb (d.h. der Druckabfall bei einem Volumenstrom vom zweiten Tankanschluss zum Tank über den zweiten Strömungspfad) beispielsweise bei wenigstens 2 bar und/oder der Ansaugdruck bei Pumpenbetrieb (d.h. der Druckabfall bei einem Volumenstrom vom Tank zum zweiten Tankanschluss über den ersten Strömungspfad) bei weniger als 1 bar, insbesondere bei weniger als 0,5 bar und weiter insbesondere bei weniger als 0,3 bar.

Es wird dabei in dieser Anmeldung davon ausgegangen, dass Hydraulikleitungen des hydraulischen Antriebssystems, falls nichts anderes angemerkt ist (z.B. falls nicht eine Drossel oder ein anderweitig verringerter Querschnitt vorgesehen sind), einen Querschnitt (d.h. eine Querschnittsfläche) aufweisen, der mindestens so groß ist, wie der Querschnitt von Anschlüssen, die durch die jeweilige Hydraulikleitung verbunden werden, so dass entsprechend bei einem Volumenstrom an Druckmittel durch die Hydraulikleitung der Druckverlust entlang der Hydraulikleitung möglichst klein ist bzw. vernachlässigbar ist. Dieser Druckverlust kann auch als nicht vermeidbarer Druckverlust angesehen werden. Die vorstehend genannte Androsselung bzw. der der vorstehend genannte Staudruck sind entsprechend so zu verstehen, dass sie größer als dieser möglichst kleine Druckverlust sind. Ebenso kann die Formulierung "relativ uneingeschränkt angesaugt werden kann" im Sinne dieses möglichst kleinen Druckverlustes verstanden werden.

Optional kann das hydraulische Antriebssystem weiterhin wenigstens einen hydraulischen Verbraucher 16 aufweisen. Beispielhaft ist ein Hydraulikzylinder als hydraulischer Verbraucher gezeigt, wobei der wenigstens einen hydraulischen Verbraucher allgemein wenigstens eine Hydraulikzylinder und/oder wenigstens einen Hydraulikmotor umfassen kann. Der wenigstens eine hydraulische Verbraucher 16 ist über eine im hydraulischen Antriebssystem vorgesehene Ventilanordnung 14 mit der Druckleitung 12 verbunden. Die Ventilanordnung 14 ist dazu eingerichtet, den Strom an Druckmittel von der Druckleitung 12 zum wenigstens einen hydraulischen Verbraucher 16 und beispielsweise ebenfalls vom wenigstens einen hydraulischen Verbraucher 16 zum Tank 10 zu steuern. Der wenigstens eine hydraulische Verbraucher 16 und die Ventilanordnung 14 stellen insbesondere eine Arbeitshydraulik einer Arbeitsmaschine dar.

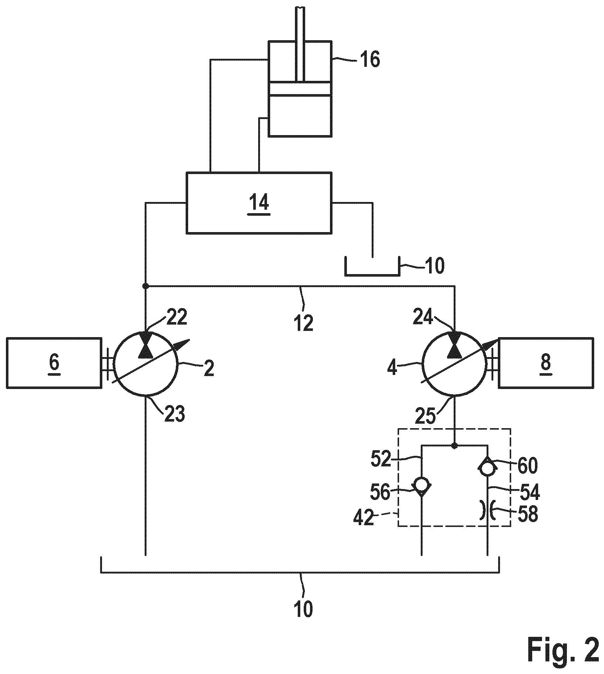

Figur 2 zeigt ein hydraulisches Antriebssystem gemäß einer Ausführungsform der Erfindung, die auf derjenigen der Figur 1 aufbaut. Die Ausgestaltung der Figur 2 entspricht größtenteils derjenigen der Figur 1, so dass auf die Beschreibung der Figur 1 verwiesen wird.

Einziger Unterschied ist, dass im zweiten Strömungspfad 54 zusätzlich ein zweites Rückschlagventil 60 vorgesehen ist, dessen Durchlassrichtung vom ersten zum zweiten Ende des zweiten Strömungspfads verläuft. Das zweite Rückschlagventil 60 ist mit der Drossel 58 in Reihe geschaltet. Entsprechend liegt bei einem Pumpenbetrieb der zweiten Hydraulikmaschine 4 lediglich ein Volumenstrom über den ersten Strömungspfad 52 vor und nicht über den zweiten Strömungspfad 54. Es wird also je nachdem, ob Pumpenbetrieb oder Motorbetrieb vorliegt, genau ein Strömungspfad mit definierten Eigenschaften für den jeweiligen Volumenstrom verwendet.

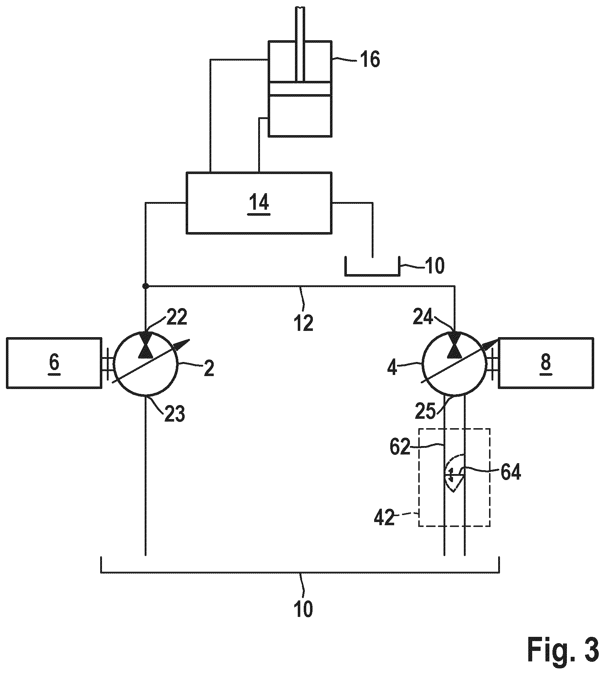

Figur 3 zeigt ein hydraulisches Antriebssystem gemäß einer weiteren Ausführungsform der Erfindung. Die Ausgestaltung der Figur 3 entspricht in großen Teil derjenigen der Figur 1, so dass zur Beschreibung gemeinsamer Elemente auf die Beschreibung der Figur 1 verwiesen wird. Der Unterschied der Ausgestaltung Figur 3 gegenüber derjenigen der Figur 1 liegt dabei in einer unterschiedlichen Implementierung der Androsseleinrichtung 42.

Die Androsseleinrichtung 42 der Figur 3 weist einen (einzelnen) Strömungspfad 62 mit einem ersten Ende, das mit dem zweiten Tankanschluss 25 verbunden ist, und einem zweiten Ende, das mit dem Tank 10 verbunden ist oder verbindbar ist, auf, in dem ein Klappenventil 64 vorgesehen ist. Das Klappenventil 64 ist so aufgebaut, dass, wenn ein Volumenstrom vom ersten Ende zum zweiten Ende auftritt, in einen ersten Öffnungsquerschnitt verstellt wird und, wenn ein Volumenstrom vom zweiten Ende zum ersten Ende auftritt, in einen zweiten Öffnungsquerschnitt verstellt wird, wobei der ersten Öffnungsquerschnitt kleiner (d.h. eine kleinere Querschnittsfläche aufweist) als der zweite Öffnungsquerschnitt ist.

Ähnlich wie in Zusammenhang mit Figur 1 erläutert wird aufgrund des kleineren Öffnungsquerschnitts im Fall eines Volumenstroms vom ersten zum zweiten Ende, beim Motorbetrieb ein gewisser Staudruck aufgebaut und erfolgt beim Pumpenbetrieb aufgrund des größeren Öffnungsquerschnitts der Volumenstrom vom zweiten zum ersten Ende relativ uneingeschränkt. Der größere Öffnungsquerschnitt ist dabei etwa gleich einem Querschnitt der Hydraulikleitung, die den Strömungspfad 62 realisiert und/oder mindestens so groß wie ein Querschnitt des zweiten Tankanschlusses 25.

Die Ausführungsformen der Figur 1 bis 3 insgesamt betreffend ist die Androsseleinrichtung 42 derart ausgestaltet, dass, allgemein formuliert, bei einem Volumenstrom an Druckmittel vom zweiten Tankanschluss zum Tank ein größerer Druckverlust auftritt als bei einem Volumenstrom an Druckmittel vom Tank zum zweiten Tankanschluss. In der Folge erfolgt ein relativ uneingeschränktes Ansaugen bei Pumpenbetrieb und eine Androsselung bei Motorbetrieb.

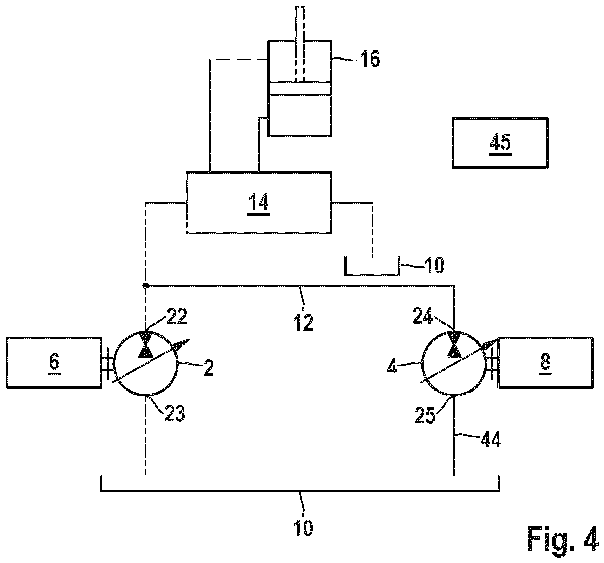

Figur 4 zeigt ein hydraulisches Antriebssystem gemäß noch einer weiteren Ausführungsform der Erfindung. Die Ausgestaltung der Figur 4 entspricht in großen Teil derjenigen der Figur 1, so dass zur Beschreibung gemeinsamer Elemente auf die Beschreibung der Figur 1 verwiesen wird. Der Unterschied der Ausgestaltung Figur 4 gegenüber derjenigen der Figur 1 (und der Figuren 2 und 3) liegt dabei darin, dass keine der Androsseleinrichtung 42 vorgesehen ist.

In der Ausgestaltung der Figur 4 ist eine als Staudruckleitung 44 bezeichnete Hydraulikleitung vorgesehen, die ein erstes Ende, das mit dem zweiten Tankanschluss verbunden ist, und ein zweites Ende, das mit dem Tank verbunden ist oder verbindbar ist, aufweist. Die Staudruckleitung 44 weist einen minimalen Querschnitt auf, der klein genug ist, so dass ein ausreichender Staudruck auftritt. Beispielsweise ist der minimale Querschnitt der Staudruckleitung gegenüber einem Querschnitt der Druckleitung 12 vermindert. Entsprechend wird bei einem Motorbetrieb wieder ein Staudruck aufgebaut, der Kavitationen verhindert.

Weiterhin ist im hydraulischen System eine elektronische Steuerung 45 vorgesehen, die dazu eingerichtet ist, die erste und/oder die zweite Hydraulikmaschine zu steuern, so dass ein Volumenstrom an Druckmittel vom zweiten zum ersten Ende der Staudruckleitung 44 einen vorbestimmten Volumenstrom-Maximalwert nicht überschreitet und/oder so dass, bei einem Volumenstrom an Druckmittel vom zweiten zum ersten Ende der Staudruckleitung 44, ein Druckabfall zwischen dem zweiten und dem ersten Ende einen vorbestimmten Druckabfall-Maximalwert nicht überschreitet. Es wird also beim einem Pumpenbetrieb ein relativ uneingeschränktes Ansaugen (entsprechend dem Druckabfall-Maximalwert) erreicht.

Dazu kann die elektronische Steuerung 45, wenn der Volumenstrom vom zweiten zum ersten Ende vorliegt, insbesondere eine Drehzahl und/oder eine Verdrängung der zweiten Hydraulikmaschine 4 einzuschränken. Entsprechende Daten können z.B. in einem Steuerungscomputerprogramm, das durch die Steuerung ausgeführt wird, hinterlegt sein.

Weitergehend kann die elektronische Steuerung 45 auch dazu eingerichtet sein, die Ventilanordnung 14 zu steuern, falls eine Arbeitshydraulik vorgesehen ist.

## Patentansprüche

1. Hydraulisches Antriebssystem, aufweisend
eine erste Hydraulikmaschine (2), die einen ersten Druckanschluss (22) und einen ersten Tankanschluss (23) aufweist, der mit einem Tank (10) verbunden oder verbindbar ist;
eine zweite Hydraulikmaschine (4), die einen zweiten Druckanschluss (24), der mit dem ersten Druckanschluss (22) über eine Druckleitung (12) verbunden ist, und einen zweiten Tankanschluss (25) aufweist, wobei die zweite Hydraulikmaschine (4) eine null-durchstellbare verstellbare Verdrängung aufweist;
eine Androsseleinrichtung (42),
wobei der zweite Tankanschluss (25) über die Androsseleinrichtung (42) mit dem Tank (10) verbunden oder verbindbar ist, so dass Druckmittel sowohl vom zweiten Tankanschluss (25) zum Tank (10) als auch vom Tank (10) zum zweiten Tankanschluss (25) durch die Androsseleinrichtung (42) fließen kann;
wobei die Androsseleinrichtung (42) derart ausgestaltet ist, dass bei einem Volumenstrom an Druckmittel vom zweiten Tankanschluss (25) zum Tank (10) ein größerer Druckverlust auftritt als bei einem Volumenstrom an Druckmittel vom Tank (10) zum zweiten Tankanschluss (25).

2. Hydraulisches Antriebssystem nach Anspruch 1, wobei die Androsseleinrichtung (42) einen ersten und einen zweiten Strömungspfad (52, 54) aufweist, die parallel zueinander an einem jeweiligen ersten Ende mit dem zweiten Tankanschluss (25) verbunden sind und an einem jeweiligen zweiten Ende mit dem Tank (10) verbunden bzw. verbindbar sind; wobei im ersten Strömungspfad (52) ein erstes Rückschlagventil (56) vorgesehen ist, dessen Durchlassrichtung vom zweiten zum ersten Ende des ersten Strömungspfads (52) verläuft; und wobei im zweiten Strömungspfad (54) eine Blende oder Drossel (58) vorgesehen ist.

3. Hydraulisches Antriebssystem nach Anspruch 2, wobei im zweiten Strömungspfad (54) ein zweites Rückschlagventil (60) vorgesehen ist, dessen Durchlassrichtung vom ersten zum zweiten Ende des zweiten Strömungspfads (54) verläuft.

4. Hydraulisches Antriebssystem nach Anspruch 1, wobei die Androsseleinrichtung (42) einen Strömungspfad (62) aufweist, der ein erstes Ende, das mit dem zweiten Tankanschluss (25) verbunden ist, und ein zweites Ende, das mit dem Tank (10) verbunden bzw. verbindbar ist, aufweist; wobei in dem Strömungspfad (62) ein Klappenventil (64) vorgesehen ist, das, wenn ein Volumenstrom vom ersten Ende zum zweiten Ende auftritt, in einen ersten Öffnungsquerschnitt verstellt wird und, wenn ein Volumenstrom vom zweiten Ende zum ersten Ende auftritt, in einen zweiten Öffnungsquerschnitt verstellt wird; wobei der ersten Öffnungsquerschnitt kleiner als der zweite Öffnungsquerschnitt ist.

5. Hydraulisches Antriebssystem nach Anspruch 4, wobei das Klappenventil (64) eine schwenkbare Klappe aufweist, deren Schwenkbewegung durch einen ersten und einen zweiten Anschlag begrenzt wird; wobei, wenn die Klappe am ersten Anschlag anliegt, der erste Öffnungsquerschnitt vorliegt und, wenn die Klappe am zweiten Anschlag anliegt, der zweite Öffnungsquerschnitt vorliegt.

6. Hydraulisches Antriebssystem nach einem der vorstehenden Ansprüche, wobei die erste Hydraulikmaschine (2) eine verstellbare Verdrängung, insbesondere eine null-durchstellbare Verdrängung, auf.

7. Hydraulisches Antriebssystem nach einem der vorstehenden Ansprüche, weiter aufweisend einen Motor (6) und/oder ein Antriebsgetriebe, der bzw. das mit einer Antriebwelle der ersten Hydraulikmaschine (2) gekoppelt ist.

8. Hydraulisches Antriebssystem nach einem der vorstehenden Ansprüche, weiter aufweisend ein Rad und/oder ein Abtriebsgetriebe und/oder eine rotatorisch bewegbare Komponente (8), das bzw. die mit einer Abtriebswelle der zweiten Hydraulikmaschine (4) gekoppelt ist.

9. Hydraulisches Antriebssystem nach einem der vorstehenden Ansprüche, weiter aufweisend wenigstens einen hydraulischen Verbraucher (16) und eine Ventilanordnung (14); wobei der wenigstens eine hydraulische Verbraucher (16) über die Ventilanordnung (14) mit der Druckleitung (12) verbunden ist; und wobei die Ventilanordnung (14) dazu eingerichtet ist, einen Fluss an Druckmittel von der Druckleitung (12) zum wenigstens einen hydraulischen Verbraucher (16) zu steuern.

10. Hydraulisches Antriebssystem, aufweisend
eine erste Hydraulikmaschine (2), die einen ersten Druckanschluss (22) und einen ersten Tankanschluss (23) aufweist, der mit einem Tank (10) verbunden oder verbindbar ist;
eine zweite Hydraulikmaschine (4), die einen zweiten Druckanschluss (24), der mit dem ersten Druckanschluss (24) über eine Druckleitung (12) verbunden ist, und einen zweiten Tankanschluss (25) aufweist, wobei die zweite Hydraulikmaschine (4) eine null-durchstellbare verstellbare Verdrängung aufweist;
eine Staudruckleitung (44), die ein erstes Ende, das mit dem zweiten Tankanschluss (25) verbunden ist, und ein zweites Ende, das mit dem Tank (10) verbunden ist oder verbindbar ist, aufweist;
eine elektronische Steuerung (45), die dazu eingerichtet ist, die erste und/oder die zweite Hydraulikmaschine (2, 4) zu steuern;
wobei die Staudruckleitung (44) einen minimalen Querschnitt aufweist, der ausreichend klein ist, so dass sich bei einem Volumenstrom an Druckmittel über die Staudruckleitung (44) vom ersten Ende zum zweiten Ende ein Staudruck ergibt; und
wobei die elektronische Steuerung (45) dazu eingerichtet ist, die erste und/oder die zweite Hydraulikmaschine (2, 4) zu steuern, so dass ein Volumenstrom an Druckmittel vom zweiten zum ersten Ende einen vorbestimmten Volumenstrom-Maximalwert nicht überschreitet und/oder so dass, bei einem Volumenstrom an Druckmittel vom zweiten zum ersten Ende, ein Druckabfall zwischen dem zweiten und dem ersten Ende einen vorbestimmten Druckabfall-Maximalwert nicht überschreitet.

11. Hydraulisches Antriebssystem nach Anspruch 10, wobei die elektronische Steuerung (45) dazu eingerichtet ist, eine Drehzahl und/oder eine Verdrängung der zweiten Hydraulikmaschine (4) einzuschränken, wenn der Volumenstrom vom zweiten zum ersten Ende vorliegt.

12. Hydraulisches Antriebssystem nach Anspruch 10 oder 11, wobei die erste Hydraulikmaschine (2) eine verstellbare Verdrängung, insbesondere eine null-durchstellbare Verdrängung, aufweist.

13. Hydraulisches Antriebssystem nach einem der Ansprüche 10 bis 12, weiter aufweisend wenigstens einen hydraulischen Verbraucher (16) und eine Ventilanordnung (14); wobei der wenigstens eine hydraulische Verbraucher (16) über die Ventilanordnung (14) mit der Druckleitung (12) verbunden ist; und wobei die Ventilanordnung (14) dazu eingerichtet ist, einen Fluss an Druckmittel von der Druckleitung (12) zum wenigstens einen hydraulischen Verbraucher (16) zu steuern; wobei die elektronische Steuerung (45) insbesondere dazu eingerichtet ist, die Ventilanordnung (14) zu steuern.
